(19) **Europäisches Patentamt**

**European Patent Office**

**Office européen des brevets**

(11) **EP 0 818 675 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(51) Int Cl.⁷: **G01N 21/89**, B41F 33/00, G01N 21/27

(21) Anmeldenummer: **97110961.6**

(22) Anmeldetag: **02.07.1997**

(54) **Verfahren und Vorrichtung zur Erfassung spektraler Remissionen**

Method and device for spectral remission measurement

Méthode et dispositif de mesure de remission spectrale

(84) Benannte Vertragsstaaten:
**AT CH DE FR GB IT LI NL SE**

(30) Priorität: **13.07.1996 DE 19628303**

(43) Veröffentlichungstag der Anmeldung:
**14.01.1998 Patentblatt 1998/03**

(73) Patentinhaber: **MAN Roland Druckmaschinen AG 63075 Offenbach (DE)**

(72) Erfinder:
- **Wendt, Karsten, Dr.
  63179 Obertshausen (DE)**
- **Schramm, Peter
  60594 Frankfurt (DE)**

(56) Entgegenhaltungen:
**EP-A- 0 378 283     WO-A-95/00335
US-A- 5 168 155**

## Beschreibung

Die Erfindung betrifft ein Verfahren sowie eine Vorrichtung zur Erfassung spektraler Remissionen gemäß dem Oberbegriff des Verfahrens- bzw. Vorrichtungsanspruches.

Bei Druckmaschinen, insbesondere Bogenoffsetdruckmaschinen ist es bekannt, zur Qualitätskontrolle mittels vorzugsweise innerhalb der Maschine angeordneter Meßeinrichtungen Remissions-Istwerte zu erfassen und daraus Qualitätsdaten bzw. Stellgrößen für die Prozeßsteuerung abzuleiten. Dabei finden insbesondere Densitometer/spektrale Densitometer, Farbmeßgeräte bzw. sogenannte Spektralfotometer Verwendung. Bei den letztgenannten Meßeinrichtungen ist es dabei als vorteilhaft anzusehen, daß mittels dieser Meßgeräte das beispielsweise im sichtbaren Bereich gelegene Licht einer Meßstelle spektral analysiert und durch digitale Weiterverarbeitung hinsichtlich verschiedener Kriterien analysiert werden kann. So ist es beispielsweise möglich, aus den spektralen Remissionen einer Meßstelle durch digitale Wichtung sowohl die in der Drucktechnik schon seit langer Zeit verwendeter Farbdichtewerte als auch farbmetrische Maßzahlen entsprechend der spektralen Verteilungskurven des CIE-Normalbeobachters abzuleiten. Die zuvorstehend beschriebenen Remissionsmeßwerte (densitometrisch, farbmetrisch, spektral) können dabei sowohl an speziell gestalteten und extra mitgedruckten Meßfeldern als auch an beliebig auswählbaren Meßstellen im Sujet (dem eigentlichen Bild) gewonnen werden. Letzteres hat dabei den Vorteil, daß nicht zusätzlicher Raum auf dem Bedruckstoff benötigt wird und ferner die Ableitung von Qualitäts- bzw. Prozeßsteuerdaten direkt am eigentlichen Druckprodukt erfolgt.

Bei Meßvorrichtungen, vermittels derer insbesondere spektrale Remissionsdaten direkt innerhalb der laufenden Maschine gewonnen werden, ist eine Anpassung der Sensorempfindlichkeit, der Beleuchtungsstärke sowie der Meßfeldgröße aufeinander nötig. Gerade bei sehr schnellaufenden Druckmaschinen stehen bei gegebener Meßfeldgröße (Millimeterbereich) und einer maximal erzielbaren Beleuchtungsstärke nur bestimmte Meßzeiten zur Verfügung, innerhalb derer die Sensorik eines insbesondere spektralen Remissionsmeßgerätes die empfangene Lichtmenge zu wandeln hat. Dies bedeutet, daß die Meßfleckgeometrie abhängig ist von der Meßblendengeometrie, der Relativgeschwindigkeit Bedruckstoff/Meßfeld gegenüber Meßgerät sowie der Integrationszeit des bzw. der Sensoren. Den Auswirkungen einer Veränderung der Relativgeschwindigkeit des Bedruckstoffes nebst Meßfeld relativ zum Meßgerät (Druckgeschwindigkeit) kann innerhalb gegebener Grenzen durch Verändern der Integrationszeit der Sensorik entgegengewirkt werden. Der gesamte Bereich der Relativgeschwindigkeit Bedruckstoff - Meßgerät (Druckgeschwindigkeit) wird dadurch aber nicht abgedeckt. Um den Aussteuerungs(Dynamik)-Bereich des Sensorsystems voll auszunutzen und damit auch ein Einhalten der gewählten Genauigkeitsklasse zu erzielen, ist es notwendig, zusätzlich auch die Beleuchtungsintensität zu verändern. Bei hohen Druckgeschwindigkeiten muß also ein Meßfeld vorgegebener Größe mit mehr Licht beaufschlagt werden als bei geringeren Druckgeschwindigkeiten.

Aus der EP 0 378 283 B1, bei welcher es sich um den nächstliegenden Stand der Technik handelt, ist eine Meßvorrichtung für die Qualitätsinspektion des gedruckten Materials bekannt, bei welcher in Abhängigkeit der Druckgeschwindigkeit ein sogenanntes Neutralgraufilter mit sich stetig ändernder Schwärzung der Transmission im Detektionsstrahlengang vor einem lichtempfindlichen Element verfahren wird. Dem Neutralgraufilter mit sich stetig ändernder Schwärzung ist dazu ein fernansteuerbarer Antrieb zugeordnet, der seine Signale von einer Steuerung erhält. Diese Steuerung steht mit einem die Geschwindigkeit der Druckmaschine erfassenden Gebersystem in Signalverbindung, um entsprechend der Druckgeschwindigkeit das Neutralgraufilter zu verfahren. Damit wird erreicht, daß mittels dieser Meßeinrichtung Meßfelder gegebener Größe bei gleichbleibend angesteuerter Beleuchtungseinrichtung bei unterschiedlichen Druckgeschwindigkeiten stets im optimalen Bereich der Sensorempfindlichkeit abgetastet werden können. Nachteilig ist hierbei aber, daß eine insbesondere durch zusätzliche bewegte Teile aufwendige, gegen mechanische Störeinflüsse empfindliche und auch der Verschmutzung ausgesetzte Lichtsteuereinrichtung in Form des verfahrbaren Neutralgraufilters nötig ist.

Aus der WO 95/00335 A1 ist es bekannt, zur Anpassung mehrerer Beleuchtungsquellen an die gleiche Farbtemperatur sogenannte Eichmessungen durchzuführen, bei welchen das jeweilige Meßsystem auf einen sogenannten Eichstandard (Weißstandard) eingemessen wird. Es erfolgt hierbei eine Verarbeitung der Farbtemperatur der Beleuchtungseinrichtung der jeweiligen Meßvorrichtung bzw. ein die Farbtemperatur wiedergebendes Maß der spektralen Energieverteilung der Beleuchtungseinrichtung mit den gemessenen fotometrischen Größen. Die beschriebene Verfahrensweise sowie die entsprechenden Vorrichtungen finden ebenfalls bei Meßeinrichtungen innerhalb einer Druckmaschine Verwendung, bei welchen eine Relativgeschwindigkeit des Bedruckstoffes gegenüber der Meßeinrichtung vorliegt.

Aus der DE 40 13 422 A1 ist eine Beleuchtungseinrichtung für ein Farbmeßgerät bekannt, bei der zusätzliche Meßwandler zur Erfassung der von einer Halogenlampe erzeugten Strahlung vorgesehen sind. Die Meßsignale der Meßwandler werden dazu verwendet, um über das Verändern der Lampenspannung eine vorgegebene Soll-Farbtemperatur der Beleuchtungsstrahlung zu erzielen.

Aufgabe der vorliegenden Erfindung ist es daher, ein Verfahren sowie eine entsprechende Vorrichtung gemäß dem Oberbegriff von Anspruch 1 bzw. 8 derartig weiterzubilden, so daß unter Vermeidung der voranstehend genannten Nachteile eine optimale Anpassung des optischen Remissionsmeßsystems an unterschiedliche Druckgeschwindigkeiten bei vorgegebener Meßfeldgröße möglich ist.

Gelöst wird diese Aufgabe durch die kennzeichnenden Merkmale des Verfahrens- bzw. Vorrichtungsanspruches. Weiterbildungen der Erfindung ergeben sich aus den jeweiligen Unteransprüchen.

Gemäß der Erfindung ist allgemein vorgesehen, daß in Abhängigkeit der Relativgeschwindigkeit des Bedruckstoffes nebst Meßfeld bezüglich der Meßeinrichtung eine die Beleuchtungsstärke/Beleuchtungsintensität der Lichtquelle direkt beeinflussende Größe variiert wird, in dem Sinne, daß bei hohen Relativgeschwindigkeiten eine höhere Beleuchtungsstärke/ Beleuchtungsintensität erzeugt wird als bei niedrigen Relativgeschwindigkeiten, daß die bei der vorliegenden Beleuchtungsintensität/Beleuchtungsstärke sich ergebene spektrale Energieverteilung ermittelt wird, und daß diese ermittelte spektrale Energieverteilung des Beleuchtungslichtes bei der jeweilig vorliegenden Beleuchtungsstärke/Beleuchtungsintensität in Verbindung mit dem von der Meßstelle remittierten und im fotoelektrischen Wandler empfangenen Lichtes bei der Auswertung mit verarbeitet wird, in dem Sinne, daß die sich bei unterschiedlichen Beleuchtungsstärken/Beleuchtungsintensitäten ergebenen unterschiedlichen spektralen Energieverteilungen des Beleuchtungslichtes herausgerechnet werden.

Die vorliegende Erfindung läßt sich dabei verfahrens- und vorrichtungsmäßig in einer Vielzahl von Varianten durchführen. So kann es möglich sein, die Spannung und/oder die Stromstärke der wenigstens eine Glühlampe aufweisenden Beleuchtungseinrichtung in Abhängigkeit der Druckgeschwindigkeit entweder kontinuierlich bzw. innerhalb bestimmter Druckgeschwindigkeitsbereichen gestuft zu verändern bzw. mehrere Glühlampen insbesondere unterschiedlicher Leistung in vorgegebener Weise zuzuschalten. Durch Auskoppeln von Licht der Beleuchtungseinrichtung (z. B. halbdurchlässiger Spiegel bzw. Blendenspiegel) wird ein Teil der Strahlung der Beleuchtungseinrichtung auf eine spezielle Referenzmeßsensorik abgeleitet, durch welche in zwei oder mehreren spektralen Bereichen eine Erfassung der spektralen Intensitätsverteilung der durch die Beleuchtungseinrichtung erzeugten Strahlung erfolgt. Hierbei kann es ausreichend sein, daß die Referenzsensorik die Strahlung der Beleuchtungseinrichtung bspw. in drei spektralen Bereichen analysiert, wobei eine Interpolation der spektralen Energieverteilung über die Stützstellen erfolgt. Das derartig ermittelte Beleuchtungsspektrum / die spektrale Energieverteilung der Beleuchtungseinrichtung wird dann bei der Auswertung des von der eigentlichen Meßstelle reflektierten Lichtes mitberücksichtigt, in dem Sinne, daß die bei unterschiedlichen Beleuchtungsstärken gegebenen unterschiedlichen spektralen Energieverteilungen auf eine einheitliche Beleuchtungsstärke und somit gegebener spektraler Energieverteilung umgerechnet werden (z.B. Normlichtart).

Eine zweite verfahrensmäßige Vorgehensweise ergibt sich, wenn in dem Auskopplungsstrahlengang zur Referenzmessung zwecks Bestimmung der spektralen Energieverteilung der Beleuchtungseinrichtung ein sogenannter Weißstandard in Form eines Probeplättchens (beispielsweise Bariumsulfat) angeordnet ist. Bei dieser Vorgehensweise wird gleichzeitig mit dem Erfassen der spektralen Remission des Meßfeldes eine sogenannte Weißreferenzmessung durchgeführt, wobei die sich bei unterschiedlichen Beleuchtungsstärken ergebenden spektralen Intensitätsveränderungen des Beleuchtungslichtes mitberücksichtigt werden. Auch in diesem Falle wird das von der Meßfläche (Meßfeld) remittierte Licht nach entsprechender fotoelektrischer Wandlung durch das Meßsystem in Verbindung mit dieser die spektrale Intensitätsverteilung wiedergegebenen Weißreferenzmessung dahingehend verrechnet, daß Meßwerte erhalten werden, welche einer stets gleichbleibenden Beleuchtungsstärke nebst spektraler Energieverteilung entsprechen. Eine derartige Referenzmessung in Verbindung mit einem Weißstandard (z. B. Bariumsulfat) ist dabei insbesondere bei der Erfassung von farbmetrischen Meßwerten bzw. spektralen Meßwerten zur farbmetrischen Weiterverarbeitung sinnvoll.

Vorrichtungsgemäß kann vorgesehen sein, daß zur Erfassung der spektralen Intensitätsverteilung der Beleuchtungseinrichtung das gleiche spektrale Meßsystem Verwendung findet, wie dasjenige System, vermittels dem die vom Meßfeld (Bedruckstoff) remittierte Strahlung fotoelektrisch gewandelt wird. Insbesondere kann es sich hierbei um einen CCD-Zeilen/Flächensensor handeln, der nebst entsprechend optischer Vorschaltung bspw. eines Beugungsgitters zu einem Spektralmeßsystem erweitert worden ist. Alternativ dazu ist es ebenfalls möglich, zur Erfassung der spektralen Intensitätsverteilung des Beleuchtungslichtes lediglich ein grob auflösendes spektrales Meßsystem zu verwenden, beispielsweise eine die Beleuchtungsstrahlung in einem roten, in einem grünen und in einem blauen Bereich analysierende und quantitativ bewertende Sensorik. Es ergeben sich bei einem derartigen Analysesystem für das gesamte Spektrum der Beleuchtungseinrichtung insgesamt drei Meßwerte, aus denen dann rechnerisch durch Interpolation unter Zugrundelegung von die spektralen Charakteristika der Beleuchtungseinrichtung berücksichtigender Algorithmen die spektrale Energieverteilung der Beleuchtungseinrichtung ermittelbar ist. Auch in diesem Falle wird die mittels bestimmter Algorithmen ermittelte spektrale Intensitätsverteilung der Beleuchtungseinrichtung in Verbindung mit der das remittierte Licht des Meßfeldes erfassenden Sensorik zur Berechnung der Meßwerte auf einen festen Beleuchtungswert (Normierung) verwendet.

In den beiden zuvorstehend skizzierten Fällen hinsichtlich der Ausführung des erfindungsgemäßen Meßverfahrens wird dabei die Erkenntnis genutzt, daß die spektrale Energieverteilung (bezogen auf die Wellenlänge des Lichtes) des durch eine Beleuchtungseinrichtung erzeugt und von einem Meßfeld reflektierten (remittierten) Lichtes mathematisch dargestellt werden kann als das Produkt des Beleuchtungsspektrums sowie der spektralen Reflexion (Remissionscharakteristik/ Remissionsgrad) der reflektierenden Fläche bzw. der Meßfläche (Bedruckstoff plus Druckfarbenauftrag). Wird mit

b $(\lambda)$die spektrale Intensitätsverteilung des Beleuchtungslichtes, mit

r $(\lambda)$ der spektrale Reflexionsgrad des Meßfeldes, und mit

M $(\lambda)$die spektrale Intensitätsverteilung des vom Meßfeld reflektierten und durch das Meßsystem empfangenen Lichtes bezeichnet, so gilt:

$$M (\lambda) = r (\lambda) \cdot b (\lambda).$$

Da vorgesehen ist, bei unterschiedlichen Druck- bzw. Relativgeschwindigkeiten v unterschiedliche Beleuchtungsstärken $b_v(\lambda)$ durch entsprechendes Ansteuern der Beleuchtungseinrichtung des Meßsystems zu verwenden, ergeben sich für unterschiedliche Relativgeschwindigkeiten v unterschiedliche spektrale Intensitätsverteilungen des durch das Meßsystem empfangenden Lichtes $M_v(\lambda)$. Allgemein gilt also für diesen Fall:

$$M_v(\lambda) = r(\lambda) \cdot b_v(\lambda).$$

Dieser Ansatz geht dabei davon aus, daß der spektrale Reflexionsgrad r $(\lambda)$ der Meßfläche unabhängig von der Beleuchtungsstärke bzw. von der spektralen Intensitätsverteilung des Beleuchtungslichtes ist, was bei den üblicherweise verwendeten Druckfarben/Bedruckstoffen hinreichend genau zutrifft.

Gemäß dem oben aufgezeigten Formelzusammenhang ist die spektrale Energieverteilung $b_v(\lambda)$ des Beleuchtungslichtes eine Funktion der Druck- bzw. Relativgeschwindigkeit v, so daß sich bei unterschiedlichen Beleuchtungsstärken und somit unterschiedlichen spektralen Zusammensetzungen des Beleuchtungslichtes $b_v(\lambda)$ unterschiedliche Meßspektren $M_v(\lambda)$ und somit auch unterschiedliche bspw. farbmetrische bzw. densitometrische Bewertungen des Meßlichtes ergeben. Um zu einer von der Relativgeschwindigkeit v unabhängigen Bewertung des vom Meßfeld reflektierten Meßlichtes M $(\lambda)$ zu gelangen, ist es lediglich nötig, folgende Umrechnung durchzuführen:

$$M (\lambda) = r (\lambda) \cdot b_v(\lambda) \cdot b (\lambda)/b_v(\lambda).$$

Setzt man $k_v (\lambda) := b (\lambda)/b_v(\lambda)$, so ergibt sich:

$$M (\lambda) = r (\lambda) \cdot b_v(\lambda) \cdot k_v(\lambda).$$

Bei unterschiedlichen Relativgeschwindigkeiten v erhält man also trotz unterschiedlicher Beleuchtungsintensitäten bzw. Spektren $b_v(\lambda)$ ein auf eine Beleuchtungsstärke bzw. damit verbundenes Spektrum b $(\lambda)$ bezogenes Spektrum des vom Meßfeldes reflektierten Lichtes M $(\lambda)$ durch Verwendung einer geschwindigkeitsabhängigen Korrekturgröße $k_v(\lambda)$, wobei diese eine von der aktuellen Relativgeschwindigkeit v abhängige Intensitätsverteilung $b_v(\lambda)$ des Beleuchtungslichtes enthält. Bei jeder Messung werden $M_v(\lambda)$ und $b_v(\lambda)$ erfaßt, so daß mit einem gespeicherten Spektrum b $(\lambda)$ die Korrekturgröße $k_v(\lambda)$ bestimmbar und somit das auf eine einheitliche Beleuchtungsart bezogene Meßspektrum M $(\lambda)$ ermittelbar ist:

$$M (\lambda) = M_v(\lambda) \cdot k_v(\lambda).$$

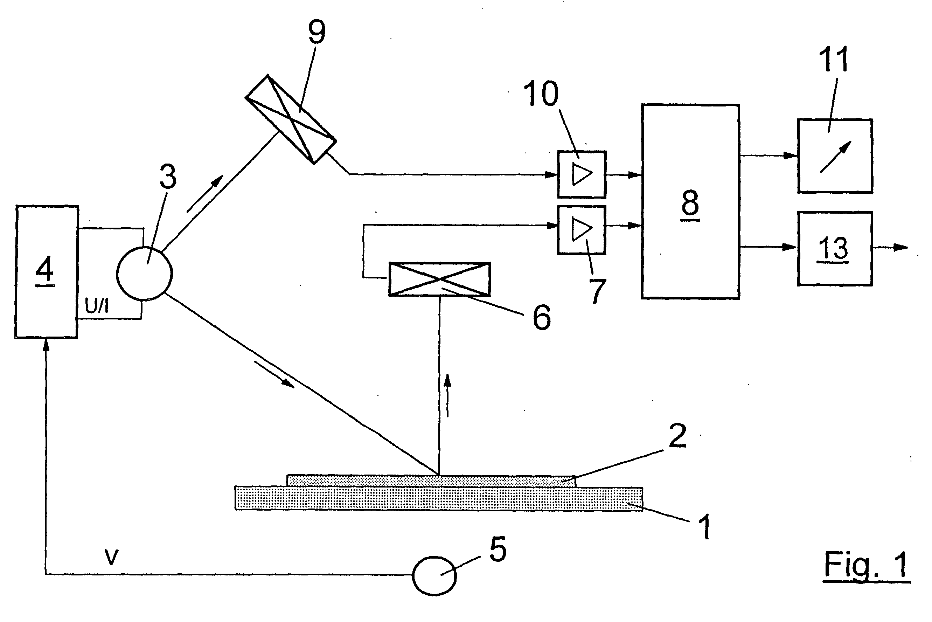

Des weiteren erfolgt die Erläuterung von Ausführungsbeispielen der Erfindung anhand der Zeichnungen. Hierbei zeigen die Fig. 1 - 4 jeweils eine vorrichtungsgemäße Ausbildung des erfindungsgemäßen Meßprinzips.

Ein mit der Geschwindigkeit v relativ zu dem in Figur 1 angedeuteten Meßsystem bewegtes auf einem Bedruckstoff 1 befindliches Meßfeld 2 gegebener Größe wird von einer als Glühlampe 3 ausgebildeten Beleuchtungseinrichtung über eine nicht dargestellte Beleuchtungsoptik mit Strahlung beaufschlagt. Die Glühlampe 3 der Beleuchtungseinrichtung wird dabei über eine zugeordnete Steuerung 4 mit der vorgesehenen Betriebsspannung U und dem entsprechenden Betriebsstrom I betrieben. Die Steuerung 4 der Lampe 3 der Beleuchtungseinrichtung steht mit einem die Druckgeschwindigkeit v erfassenden Signalgeber 5 in Signalverbindung.

Bei der Steuerung 4 handelt es sich vorzugsweise um eine programmierbare Steuerung, wobei in einem Speicher dieser Steuerung 4 tabellarisch zu bestimmten Geschwindigkeitsbereichen der Relativgeschwindigkeit v bzw. in Form eines gespeicherten Funktionszusammenhanges (Kennlinie) unterschiedlichen Werten der Relativgeschwindigkeit v vorgesehene Werte der Betriebsspannung U / des Stromes I zum Betreiben der Lampe 3 abgespeichert sind. Demzufolge wird die Lampe 3 zur Beaufschlagung des Meßfeldes 2 mit Strahlung bei unterschiedlichen Relativgeschwindigkeiten v unterschiedlich angesteuert, d.h. die Beleuchtungsstärke/die Beleuchtungsintensität verändert sich in Abhängigkeit der Relativgeschwindigkeit v.

Das von dem mit der Geschwindigkeit v relativ zum Meßsystem bewegte Meßfeld 2 auf dem Bedruckstoff 1 remittierte Licht der Lampe 3 wird auf einen fotoelektrischen Empfänger 6 durch nicht dargestellte optische Mittel (Blenden, Linsen, Lichtleiter usw.) abgebildet. Bei dem fotoelektrischen Empfänger 6 kann es sich hierbei insbesondere um einen spektralen Empfänger handeln, welcher das Licht in unterschiedlichen Wellenlängen selektiv bewertet und in entsprechend abfragbare Signale wandelt. Vorzugsweise findet hier ein CCD-Zeilensensor oder eine Diodenzeile mit vorgeschalteten Spektralanalysator (z. B. Gitter) Verwendung. Derartige fotoelektrische Empfänger 6 als spektrale Remissionsempfänger sind bekannt und bedürfen daher keiner weiteren Erläuterung.

Die Signale des fotoelektrischen Empfängers 6 werden über eine diesem nachgeschalteten Verstärkereinrichtung 7 verstärkt und ausgangsseitig an eine der Verstärkereinrichtung 7 nachgeschaltete Auswerteeinheit 8 weitergeleitet.

Zusätzlich neben dem fotoelektrischen Empfänger 6 zur Erfassung des vom Meßfeld 2 reflektierten Lichtes der Lampe 3 ist der Lampe 3 ein deren Strahlung direkt erfassender fotoelektrischer Empfänger 9 nebst nicht dargestellter optischer Mittel zugeordnet, durch welchen eine Spektralanalyse des direkt von der Lampe 3 abgegebenen Lichtes erfolgt. Auch bei dem weiteren fotoelektrischen Empfänger 9 kann es sich um einen CCD-Zeilensensor oder eine Diodenzeile handeln, der bzw. die durch Vorschaltung bspw. eines Beugungsgitters zu einem spektralen Analysesystem erweitert ist. Der fotoelektrische Empfänger 9 ist ausgangsseitig an eine Verstärkereinrichtung 10 geschaltet, deren Ausgangssignal ebenfalls der Auswerteeinrichtung 8 zugeleitet wird. In der Auswerteeinrichtung 8 erfolgt dabei die zuvorstehend erläuterte Auswertung der spektralen Intensitätsverteilung des vom Meßfeld reflektierten Lichtes $M_v(\lambda)$ sowie des direkt von der Lampe 3 entsprechend deren unterschiedlicher Ansteuerung (Relativgeschwindigkeit v) ausgesendeten Lichtes $b_v(\lambda)$. Durch die Auswerteeinrichtung 8 erfolgt die Errechnung eines auf eine vorgegebene (gespeicherte) Beleuchtungsstärke (spektrale Intensitätsverteilung $b(\lambda)$) bezogenen Meßwertes $M(\lambda)$, welcher auf einer Anzeigeeinrichtung 11 ausgangsseitig der Auswerteeinrichtung 8 nachgeschaltet darstellbar ist. Der Meßwert $M(\lambda)$ kann ferner auch über einen Transmitter 13 einer weiterverarbeitenden Station (nicht dargestellt) zugeführt werden, in welcher entsprechende Daten für eine Qualitätskontrolle, die Ableitung von Steuergrößen (Regler) usw. bildbar sind.

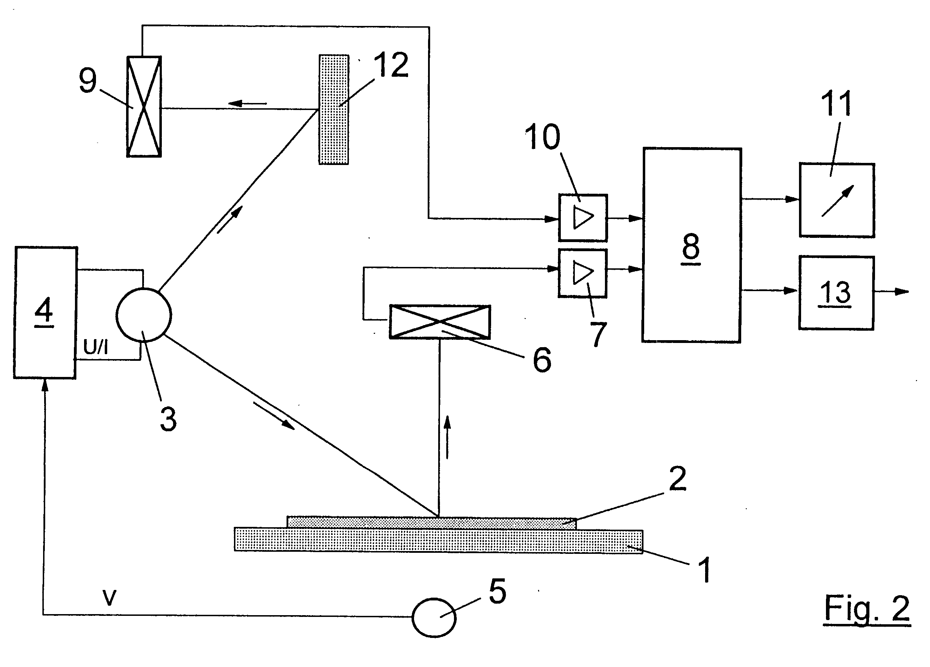

Die Meßvorrichtung gemäß Figur 2 unterscheidet sich von der in Figur 1 gezeigten Variante dadurch, daß in dem Strahlengang zur Beaufschlagung des fotoelektrischen Empfängers 9 mit dem entsprechend der Druckgeschwindigkeit v unterschiedlich von der Lampe 3 abgegebenen Lichtes ein das Licht der Lampe 3 reflektierender Weißstandard 12 (Absolutweiß) angeordnet ist. Auch in diesem Ausführungsbeispiel werden die Ausgangssignale des fotoelektrischen Empfängers 9 über eine Verstärkereinheit 10 der das Licht des fotoelektrischen Empfängers 6 verarbeitenden Auswerteeinheit 8 zugeleitet und in der obenstehend beschriebenen Weise verarbeitet. Es folgt ebenfalls eine Ermittlung eines von den unterschiedlichen spektralen Intensitätsverteilungen der Lampe 3 und somit von der Druckgeschwindigkeit unabhängigen Meßwertes $M(\lambda)$, welcher auf der Anzeigeeinrichtung 11 darstellbar bzw. über den Transmitter 13 weiterleitbar ist.

Weiter obenstehend ist bereits angedeutet, daß es sich bei dem weiteren fotoelektrischen Empfänger 9 zur Erfassung des direkt von der Lampe 3 abgegebenen Lichtes um einen in gleicher Weise ausgebildeten Empfänger handeln kann, wie dieser zur spektralen Aufteilung und fotoelektrischen Wandlung des von der Meßfläche 2 reflektierten Lichtes Verwendung findet. Ebenfalls ist es dabei möglich, den weiteren fotoelektrischen Empfänger 9 als ein das Licht der Lampe 3 in beispielsweise zwei oder drei unterschiedlichen spektralen Bereichen selektiv erfassendes Sensorsystem auszubilden und aufgrund der derartig erhaltenen Meßwerte die spektrale Intensitätsverteilung des Lichtes unter Zugrundelegung von Interpolationsalgorithmen zu ermitteln. Dies ist insbesondere bei dem ein kontinuierliches Spektrum aufweisenden Licht von Glühlampen in einfacher Weise möglich.

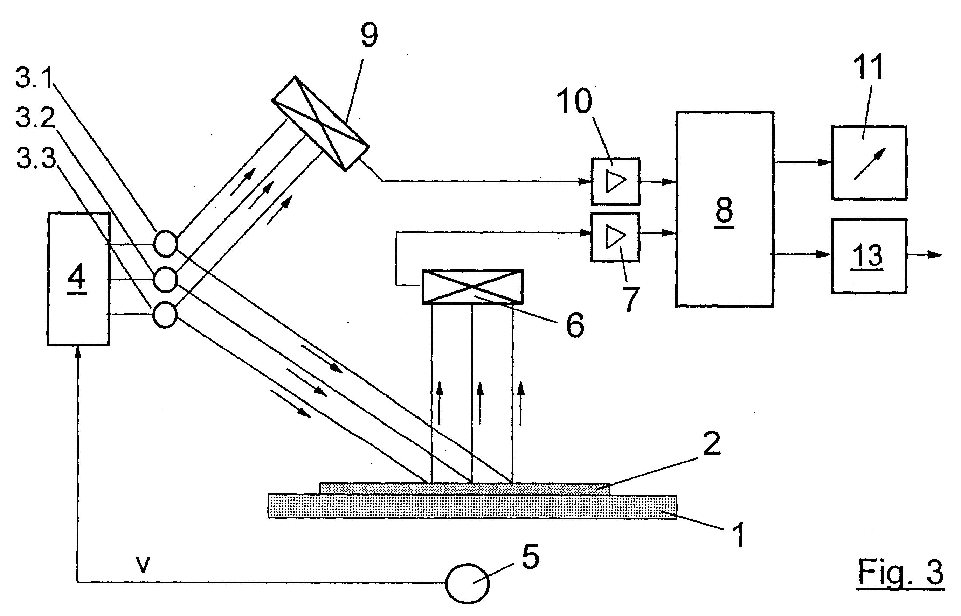

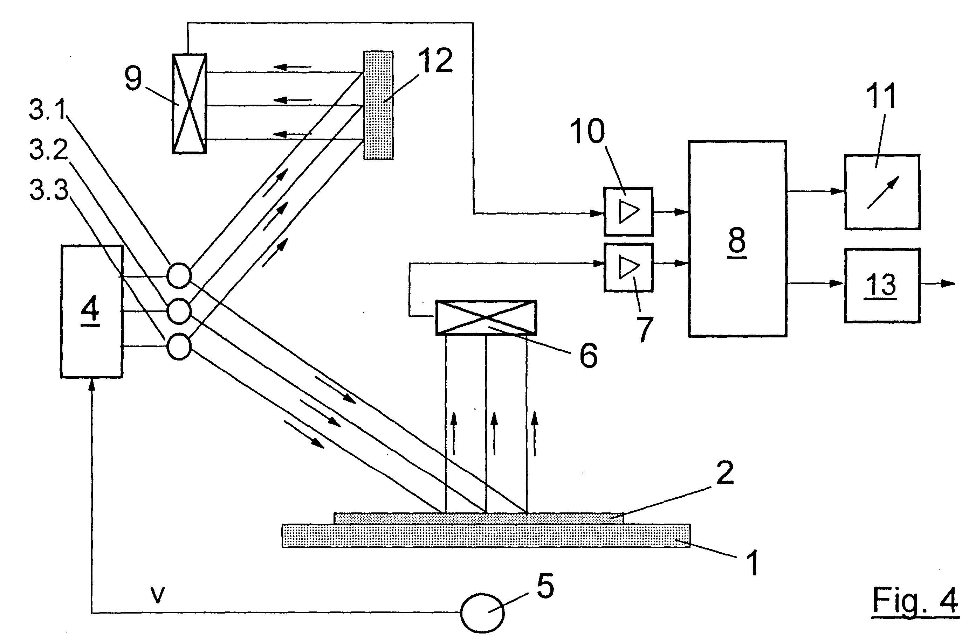

Bei den in den Fig. 3 und 4 gezeigten Ausführungsvarianten weist die Beleuchtungseinrichtung insgesamt drei über die Steuerung 4 einzeln schaltbare Lampen 3.1, 3.2, 3.3 auf. Diese Lampen 3.1, 3.2, 3.3 sind dabei in der Leistung unterschiedlich und aufeinander abgestimmt. Vorzugsweise weist Lampe 3.2 die doppelte Leistung von Lampe 3.1 und Lampe 3.3 wiederum die doppelte Leistung von Lampe 3.2 auf. Durch einzelnes bzw. kombiniertes Schalten ein oder mehrerer der Lampen 3.1, 3.2, 3.3 ist es mit einer derartig ausgebildeten Beleuchtungseinrichtung möglich, einen Leistungsbereich, der dem siebenfachen der Leistung von Lampe 3.1 entspricht, abzudecken. Zusätzlich kann auch vorgesehen sein, wenigstens eine der Lampen 3.1, 3.2, 3.3 zumindest in einem Teil des Leistungsbereiches kontinuierlich bzw. in Leistungsstufen anzusteuern, so daß sich eine kontinuierliche bzw. quasikontinuierliche Anpassung der Beleuchtungsleistung entsprechend der jeweiligen Relativgeschwindigkeit v ergibt.

<u>Bezugszeichenliste</u>

| | |
|---|---|
| 1 | Bedruckstoff |
| 2 | Meßfeld |
| 3, 3.1, 3.2, 3.3 | Lampe |
| 4 | Steuerung (Lampen 3, 3.1, 3.2, 3.3) |
| 5 | Signalgeber (Druckgeschwindigkeit v) |
| 6 | fotoelektrischer Empfänger |
| 7 | Verstärkereinrichtung |

8          Auswerteeinheit
9          fotoelektrischer Empfänger
10         Verstärkereinrichtung
11         Anzeigeeinrichtung
12         Weißstandard (weißer Diffusreflektor)

v    Druckgeschwindigkeit
U    Spannung (Lampe 3)
1    Strom (Lampe 3)

**Patentansprüche**

1.  Verfahren zur Erfassung spektraler Remissionen, insbesondere innerhalb einer Druckmaschine, wobei mit einer Geschwindigkeit relativ zu einem Messsystem bewegte Messfelder (2) mit in Abhängigkeit der Relativgeschwindigkeit zwischen den Messfeldern (2) und dem Messsystem unterschiedlich starker Strahlung einer stationär angeordneten Beleuchtungseinrichtung (3, 4) beaufschlagt werden und die von den Messfeldern (2) remittierte Strahlung nach fotoelektrischer Wandlung zur Ableitung von Messgrößen weiter verarbeitet werden, **dadurch gekennzeichnet,** **dass** bei hohen Relativgeschwindigkeiten eine höhere Beleuchtungsstärke erzeugt wird als bei niedrigen Relativgeschwindigkeiten, dass bei der jeweiligen Relativgeschwindigkeit zwischen Messfeldern (2) und Messsystem die spektrale Intensitätsverteilung der Lichtquelle (3) der Beleuchtungseinrichtung (3, 4) erfasst wird und **dass** die sich bei unterschiedlichen Beleuchtungsstärken ergebenden unterschiedlichen spektralen Energieverteilungen des Beleuchtungslichtes herausgerechnet werden.

2.  Verfahren nach Anspruch 1, **dadurch gekennzeichnet,** **dass** die direkt von der Beleuchtungseinrichtung (3, 4) abgegebene Strahlung zur Feststellung der spektralen Intensitätsverteilung der Lichtquelle (3) der Beleuchtungseinrichtung (3, 4) des Messsystems verwendet wird.

3.  Verfahren nach Anspruch 1, **dadurch gekennzeichnet,** **dass** die an einem Weißstandard (12) reflektierte Strahlung der Beleuchtungseinrichtung (3, 4) zur Feststellung der spektralen Intensitätsverteilung der Beleuchtungseinrichtung des Messsystems verwendet wird.

4.  Verfahren nach einem der vorhergehenden Ansprüche, **dadurch gekennzeichnet,** **dass** zur Feststellung der spektralen Intensitätsverteilung der Strahlung der Beleuchtungseinrichtung (3, 4) eine Erfassung der Intensitäten in wenigstens zwei spektralen Bereichen erfolgt.

5.  Verfahren nach Anspruch 4, **dadurch gekennzeichnet,** **dass** zur Feststellung der spektralen Intensitätsverteilung der Strahlung der Beleuchtungseinrichtung (3, 4) eine Interpolation über die wenigstens zwei erfassten spektralen Intensitäten als Stützstellen erfolgt.

6.  Verfahren nach einem der vorhergehenden Ansprüche, **dadurch gekennzeichnet,** **dass** bei mehreren Lichtquelle (3;3.1,3.2,3.3) der Beleuchtungseinrichtung (3,4) diese in Abhängigkeit der Relativgeschwindigkeit v einzeln und/oder gruppenweise geschaltet werden.

7.  Verfahren nach einem der vorhergehenden Ansprüche, **dadurch gekennzeichnet,** **dass** wenigstens eine als Glühlampe ausgebildete Lichtquelle (3;3.1,3.2,3.3) der Beleuchtungseinrichtung in Abhängigkeit der Relativgeschwindigkeit v zwischen Messfeldern und Messsystem mit unterschiedlicher Betriebsspannung unterschiedlichem Betriebsstrom angesteuert wird.

8.  Vorrichtung zur Durchführung des Verfahrens nach einem der vorhergehenden Ansprüche, mit einer Beleuchtungseinrichtung zur Bestrahlung von mit einer Relativgeschwindigkeit bezüglich einer Messeinrichtung bewegten Messfeldern (2) auf einem Bedruckstoff (1), sowie wenigstens einem Messkanal (6, 7) zur fotoelektrischen Wandlung der von den Messfeldern (2) reflektierten Strahlung sowie nachgeschalteter Auswerteeinheit (8) zur Ermittlung von Messwerten, **dadurch gekennzeichnet,** **dass** die Beleuchtungseinrichtung eine Steuerung (4) zur Erzeugung geschwindigkeitsabhängiger Strahlungsstärken der Lichtquelle (3) aufweist, wobei die Steuerung so ausgelegt ist, daß bei hohen Relativgeschwindigkeiten eine höhere Strahlungsstärke erzeugt wird als bei niedrigen Relativgeschwindigkeiten, dass der Beleuchtungseinrichtung ein zusätzlicher Messkanal (9, 10; 12) zur Erfassung der spektralen Intensitätsverteilung der Strahlung der Lichtquelle (3) zugeordnet ist, und dass die Auswerteeinheit (8) zur Verarbeitung der von den Messfeldern (2) reflektierten Strahlung zur Herausberechnung der sich bei unterschiedlichen Strahlungsstärken ergebenden unterschiedlichen spektralen Energieverteilungen der Strahlung des Lichtquelle (3) ausgebildet ist.

9.  Vorrichtung nach Anspruch 8,

**dadurch gekennzeichnet,**
**dass** der der Lichtquelle (3) zugeordnete Messkanal (9, 10) zur direkten Erfassung er von der Lichtquelle (3) abgegebene Strahlung ausgebildet ist.

10. Vorrichtung nach Anspruch 8,
**dadurch gekennzeichnet,**
**dass** in dem der Lichtquelle (3) zugeordneten Messkanal (9, 10) ein die Strahlung der Lichtquelle (3) reflektierender Weißstandard (12) angeordnet ist.

11. Vorrichtung nach Anspruch 8, 9 oder 10,
**dadurch gekennzeichnet,**
**dass** der fotoelektrische Wandler (9) in dem der Lichtquelle (3) zugeordneten Messkanal (9, 10) und der fotoelektrische Wandler (6) in dem dem Messfeld (2) zugeordneten Messkanal (6, 7) als gleichartige Messsysteme ausgebildet sind.

12. Vorrichtung nach Anspruch 8, 9 oder 10,
**dadurch gekennzeichnet,**
**dass** der fotoelektrische Wandler (9) zur Erfassung der Strahlung der Lichtquelle (3) in wenigstens zwei spektralen Bereichen in dem der Lichtquelle (3) zugeordneten Messkanal (9, 10) ausgebildet ist.

13. Vorrichtung nach Anspruch 12,
**dadurch gekennzeichnet,**
**dass** die Auswerteeinheit (8) zur Ausführung einer Interpolation über die erfassten spektralen Intensitäten als Stützstellen ausgebildet ist.

14. Vorrichtung nach einem oder mehreren der Ansprüche 8 bis 13,
**dadurch gekennzeichnet,**
**dass** die Lichtquelle (3) der Beleuchtungseinrichtung als wenigstens eine Glühlampe ausgebildet ist, welche über die Steuerung (4) in Abhängigkeit der Relativgeschwindigkeit (v) zwischen Messfeld (2) und Messeinrichtung (3 - 12) mit unterschiedlichen Betriebsspannungen/Strömen (U/I) betreibbar ist.

15. Vorrichtung nach einem oder mehreren der Ansprüche 8 bis 14,
**dadurch gekennzeichnet,**
**dass** die Beleuchtungseinrichtung mehrere insbesondere als Glühlampen ausgebildete Lichtquellen (3; 3.1, 3.2, 3.3) aufweist, welche über die Steuerung (4) in Abhängigkeit der Relativgeschwindigkeit (v) zwischen Messfeld (2) und Messeinrichtung (3 - 12) einzeln und/oder gruppenweise schaltbar sind.

**Claims**

1. Process for detecting spectral reflectance, particularly within a printing press, wherein measuring fields (2) moved at a speed relative to a measuring system are subjected to differentially strong radiation in dependence on the relative speed between the measuring field (2) and the measuring system of a stationary arranged illumination device (3, 4) and the radiation reflected from the measuring fields (2) after photoelectric transformation is further processed to derive measured values, **characterised in that**, at high relative speeds, a higher illumination strength is generated than at lower relative speeds, that at the respective relative speed between measuring fields (2) and measuring system, the spectral intensity distribution of the light source (3) of the illumination device (3, 4) is sensed and that the differing spectral energy distributions of the illuminating light emerging at different illumination strengths are calculated.

2. Process according to Claim 1, **characterised in that** the radiation emitted directly from the illumination device (3, 4) is used for determining the spectral intensity distribution of the light source (3) of the illumination device (3, 4) of the measuring system.

3. Process according to Claim 1, **characterised in that** the radiation of the illumination device (3, 4) reflected on a white standard (12) is used to determine the spectral intensity distribution of the illumination device of the measuring system.

4. Process according to one of the preceding Claims, **characterised in that** for determining the spectral intensity distribution of the radiation of the illumination device (3, 4), sensing of the intensities takes place in at least two spectral regions.

5. Process according to Claim 4, **characterised in that** for determining the spectral intensity distribution of the radiation of the illumination device (3, 4), an interpolation takes place via the at least two sensed spectral intensities as base positions.

6. Process according to one of the preceding Claims, **characterised in that** in the case of several light sources (3, 3.1, 3.2, 3.3) of the illumination device (3, 4), these can be switched in dependence on the relative speed v individually and/or in groups.

7. Process according to one of the preceding Claims, **characterised in that** at least one light source constructed as an incandescent lamp (3, 3.1, 3.2, 3.3) of the illumination device is controlled in dependence on the relative speed v between measuring fields and measuring system with a different operating voltage/different operating current.

8. Apparatus for carrying out the process according to one of the preceding Claims with an illumination device for irradiating measuring fields (2) moved with a relative speed with respect to a measuring device on a printed material (1) as well as at least one measuring channel (6, 7) for the photoelectric conversion of the radiation reflected from the measuring fields (2) as well as an evaluation unit (8) connected downstream for determining measured values, **characterised in that** the illumination device has a control (4) for generating speed-dependent irradiation strengths of the light source (3), wherein the control is so configured that, at high relative speeds, a higher radiation intensity is generated than at lower relative speeds, that the illumination device is fitted with an additional measuring channel (9, 10; 12) to detect the spectral intensity distribution of the radiation of the light source (3) and that the evaluation unit (8) for processing the radiation reflected from the measuring fields (2) is constructed for calculating the different spectral energy distributions of the radiation of the light source (3) emerging at differing radiation strengths.

9. Apparatus according to Claim 8, **characterised in that** the measuring channel (9, 10) fitted to the light source (3) is constructed for the direct sensing of the radiation emitted from the light source (3).

10. Apparatus according to Claim 8, **characterised in that** in the measuring channel (9, 10) fitted to the light source (3), there is arranged a white standard (12) reflecting the radiation of the light source (3).

11. Apparatus according to Claim 8, 9 or 10, **characterised in that** the photoelectric converter (9) in the measuring channel (9, 10) fitted to the light source (3) and the photoelectric converter (6) in the measuring channel fitted to the measuring field (2) are constructed as identical measuring systems.

12. Apparatus according to Claim 8, 9 or 10, **characterised in that** the photoelectric converter (9) is constructed to sense the radiation of the light source (3) in at least two spectral regions in the measuring channel (9, 10) fitted to the light source (3).

13. Apparatus according to Claim 12, **characterised in that** the evaluation unit (8) is constructed to carry out an interpolation via the spectral intensities detected as base positions.

14. Apparatus according to one or more of Claims 8 to 13, **characterised in that** the light source (3) of the illumination device is constructed as at least one incandescent lamp which can be driven via the control (4) in dependence on the relative speed v between measuring field (2) and measuring device (3 - 12) with differential operating voltages/currents (U/I).

15. Apparatus according to one or more of Claims 8 to 14, **characterised in that** the illumination device has several light sources (3, 3.1, 3.2, 3.3) particularly constructed as incandescent lamps which can be switched via the control (4) in dependence on the relative speed v between measuring field (2) and measuring device (3 - 12) individually and/or in groups.

## Revendications

1. Procédé pour détecter des réflexions spectrales, en particulier à l'intérieur d'une machine d'impression, des champs de mesure (2) déplacés avec une vitesse relativement à un système de mesure recevant un rayonnement d'intensité différente de façon dépendant de la vitesse relative entre les champs de mesure (2) et le système de mesure d'un dispositif d'éclairage (3, 4) agencé de façon fixe et le rayonnement réfléchi par les champs de mesure (2) étant encore traité après transformation photoélectrique pour la dérivation de grandeurs de mesure, **caractérisé en ce que**, pour des vitesses relatives élevées, une intensité d'éclairage plus élevée est engendrée que pour des vitesses relatives faibles, **en ce que**, pour les vitesses relatives respectives entre les champs de mesure (2) et le système de mesure, la répartition d'intensité spectrale de la source de lumière (3) du dispositif d'éclairage (3, 4) est détectée, et **en ce que** les répartitions d'énergie spectrales différentes, résultant de différentes intensités d'éclairage, de la lumière d'éclairage sont calculées.

2. Procédé selon la revendication 1, **caractérisé en ce que** le rayonnement fourni directement par le dispositif d'éclairage (3, 4) est utilisé pour déterminer la répartition d'intensité spectrale de la source de lumière (3) du dispositif d'éclairage (3, 4) du système de mesure.

3. Procédé selon la revendication 1, **caractérisé en ce que** le rayonnement, réfléchi sur un étalon blanc (12), du dispositif d'éclairage (3, 4) est utilisé pour déterminer la répartition d'intensité spectrale du dispositif d'éclairage du système de mesure.

4. Procédé selon une des revendications précédentes, **caractérisé en ce que**, pour déterminer la répartition d'intensité spectrale du rayonnement du dispositif d'éclairage (3, 4), on effectue une détection des intensités dans au moins deux zones spectrales.

**5.** Procédé selon la revendication 4, **caractérisé en ce que**, pour déterminer la répartition d'intensité spectrale du rayonnement du dispositif d'éclairage (3, 4), on effectue une interpolation via les au moins deux intensités spectrales détectées comme points d'appui.

**6.** Procédé selon une des revendications précédentes, **caractérisé en ce que**, pour plusieurs sources de lumière (3 ; 3.1, 3.2, 3.3) du dispositif d'éclairage (3, 4), celles-ci sont commutées individuellement et/ou en groupe de façon dépendant de la vitesse relative (v).

**7.** Procédé selon une des revendications précédentes, **caractérisé en ce qu'**au moins une source de lumière (3 ; 3.1, 3.2, 3.3), réalisée comme lampe à incandescence, du dispositif d'éclairage est commandée avec une tension de fonctionnement différente/un courant de fonctionnement différent de façon dépendant de la vitesse relative (v) entre les champs de mesure et le système de mesure.

**8.** Dispositif pour la mise en oeuvre du procédé selon une des revendications précédentes, comportant un dispositif d'éclairage pour éclairer des champs de mesure (2) déplacés avec une vitesse relative par rapport à un dispositif de mesure sur une matière d'impression (1), ainsi qu'au moins un canal de mesure (6, 7) pour la transformation photoélectrique du rayonnement réfléchi par les champs de mesure (2), ainsi qu'une unité d'exploitation (8) disposée en aval pour déterminer des valeurs de mesure, **caractérisé en ce que** le dispositif d'éclairage présente une commande (4) pour engendrer des intensités de rayonnement dépendant de la vitesse de la source de lumière (3), la commande étant telle que, pour des vitesses relatives élevées, une intensité de rayonnement plus élevée est engendrée que pour des vitesses relatives faibles, **en ce que** le dispositif d'éclairage est associé à un canal de mesure supplémentaire (9, 10 ; 12) pour détecter la répartition d'intensité spectrale du rayonnement de la source lumineuse (3), et **en ce que** l'unité d'exploitation (8) pour traiter le rayonnement réfléchi par les champs de mesure (2) est réalisée pour calculer les répartitions d'énergie spectrales différentes, résultant de différentes intensités de rayonnement, du rayonnement de la source lumineuse (3).

**9.** Dispositif selon la revendication 8, **caractérisé en ce que** le canal de mesure (9, 10), associé à la source de lumière (3), est réalisé pour la détection directe du rayonnement fourni par la source de lumière (3).

**10.** Dispositif selon la revendication 8, **caractérisé en ce que**, dans le canal de mesure (9, 10) associé à la source de lumière (3), il est agencé un étalon blanc (12) réfléchissant le rayonnement de la source de lumière (3).

**11.** Dispositif selon la revendication 8, 9 ou 10, **caractérisé en ce que** le convertisseur photoélectrique (9) dans le canal de mesure (9, 10) associé à la source de lumière (3) et le convertisseur photoélectrique (6) dans le canal de mesure (6, 7) associé au champ de mesure (2) sont réalisés comme des systèmes de mesure du même type.

**12.** Dispositif selon la revendication 8, 9 ou 10, **caractérisé en ce que** le convertisseur photoélectrique (9) pour détecter le rayonnement de la source de lumière (3) est réalisé dans au moins deux zones spectrales dans le canal de mesure (9, 10) associé à la source de lumière (3).

**13.** Dispositif selon la revendication 12, **caractérisé en ce que** l'unité d'exploitation (8) est réalisée pour effectuer une interpolation via les intensités spectrales détectées comme points d'appui.

**14.** Dispositif selon une ou plusieurs des revendications 8 à 13, **caractérisé en ce que** la source de lumière (3) du dispositif d'éclairage est réalisée comme au moins une lampe à incandescence, qui, par l'intermédiaire de la commande (4), peut fonctionner de façon dépendant de la vitesse relative (v) entre le champ de mesure (2) et le dispositif de mesure (3 - 12) avec des tensions/courants de fonctionnement (U/I) différents.

**15.** Dispositif selon une ou plusieurs des revendications 8 à 14, **caractérisé en ce que** le dispositif d'éclairage présente plusieurs sources de lumière (3 ; 3.1, 3.2, 3.3) réalisées en particulier comme lampes à incandescence, qui, par l'intermédiaire de la commande (4), peuvent être commutées individuellement et/ou en groupe de façon dépendant de la vitesse relative (v) entre le champ de mesure (2) et le dispositif de mesure (3 - 12).

Fig. 1

EP 0 818 675 B1

Fig. 2

EP 0 818 675 B1

Fig. 3

Fig. 4

EP 0 818 675 B1